# EUROPÄISCHE PATENTANMELDUNG

(11) **EP 3 305 146 A1**
(43) Veröffentlichungstag der Anmeldung: **11.04.2018**
(21) Anmeldenummer: 16002165.5
(22) Anmeldetag: 07.10.2016
(51) Int. Cl.: A47J 37/06, A47J 37/07

(54) **REGULIERTER GRILL**

(71) Anmelder: Schunke, Michael, 06242 Braunsbedra, OT Großkayna (DE)
(72) Erfinder: Dögel, Mathias, 06184 Landsberg OT Golma (DE); Schunke, Michael, 06242 Braunsbedra OT Grosskayna (DE)

(57) **Zusammenfassung**

Die Erfindung Fiegulierter Grill betrifft ein Grillgerät mit automatischer Regulierung von physikalischen Parametern.

## Beschreibung

### Technisch- wirtschaftliches Gebiet:

Die Erfindung betrifft ein Gerät, das physikalische Parameter nutzt, um damit Lebensmittel über einen längeren Zeitraum unter konstanten, physikalischen Bedingungen zu Grillen.

### Stand der Technik:

Nach dem Stand der Technik ist eine Vielzahl von Grillarten bekannt. Herkömmliche Grills sind konstruktiv so gestaltet, dass sich an ihrer Oberfläche ein Grillrost (Heizfläche, Heizflächenraum) für die Aufnahme von Lebensmitteln befindet. Zur Erzeugung von Wärme (Hitze) kann eine geänderte Energiezufuhr dienen. Für den Betrieb mit Grillkohle ist z.B. eine einfache Höhenverstellung möglich. Auch kommen Gas oder Elektroheizungen zum Einsatz.
Nachteilig bei all diesen Geräten ist, dass von vielen physikalischen Parametern, die zum Grillen infrage kommen, nur wenige reguliert werden.

### Aufgabenstellung:

Es ist Aufgabenstellung, dass physikalische Parametern genutzt werden, um damit Lebensmittel über einen längeren Zeitraum unter konstanten, physikalischen Bedingungen zu Grillen.

### Zu Anspruch 1

Es wird ein Gerät zur Regulierung von physikalischen Größen durch folgende Merkmale beansprucht,
1. wobei das Gerät aus einem äußeren Gehäuse (1) besteht,
2. wobei das äußere Gehäuse (1) von einem Heizflächenraum (7) begrenzt wird,
3. wobei der Heizflächenraum (7) zur Aufnahme von erhitzbaren Lebensmitteln dient,
4. das äußere Gehäuse (1) einen regulierbaren Innenraum (2) enthält,
5. in dem regulierbaren Innenraum (2) eine regulierbare Energiezufuhr (6) enthalten ist,
6. wobei die regulierende Energiezufuhr (6) zur Erzeugung von Wärme dient,
7. wozu die physikalischen Größen im Sensorsystem (4) genutzt werden,
8. so dass die erzeugte Wärme den Heizflächenraum (7) in einem begrenzten Temperaturbereich hält,
9. womit die erhitzbaren Lebensmittel im Heizflächenraum (7) in dem begrenzten Temperaturbereich enthalten sind.

Mit Anspruch 1 wird als Hauptanspruch ein Gerät benannt, wie es z. B. als Grillgerät bekannt ist, aber auch für die generelle Erhitzung von Lebensmitteln nutzbar sein kann. Das beanspruchte Gerät besteht aus einem äußeren Gehäuse (1), wie es z. B. von Küchengeräten oder industriellen Geräten zum Grillen bzw. Vorgrillen von Lebensmitteln bekannt ist. Auch größere industriell genutzte Anlagen sind zu nennen. Der dazu erforderliche Heizflächenraum (7) wird energetisch durch die Heizfläche (3) mit Wärme (Energie) versorgt. Der Heizflächenraum (7) dient zur Aufnahme von erhitzbaren Lebensmitteln. Das ist allgemein von Heizflächen, wie sie in Küchengeräten, Grills gegeben sind, bekannt. Es könnten auch technische Ausgestalltungen z. B. für die definierte Erhitzung von Geräten oder Materialien vorliegen, wie sie für Desinfektion, Verformung oder Oberflächengestaltung erforderlich sind. Um diese technische Effekte zu erreichen, enthält das Gerät (1) einen z. B nach räumlicher Größe regulierbaren Innenraum (2). Damit wirkt sich die regulierbare Energiezufuhr (6), die in diesem Innenraum enthalten ist, um eine Temperatur zu erzeugen, unterschiedlich auf den zur Verfügung gestellten Raum aus. Dieser Raum wird unter Nutzung der vom physikalischen Sensorsystem (4) zur Verfügung gestellten Größen, regeltechnisch in einem begrenzten Temperarturbereich gehalten. Damit wird das anspruchsgemäße Merkmal als Ziel erreicht, wonach erhitzbare Lebensmittel im Heizflächenraum (7) einem begrenzten Temperaturbereuch ausgesetzt sind.

### Zu Anspruch 2

Mit Anspruch 2 wird eine Ausgestaltung von Anspruch 1 beschrieben,
1. wobei das Sensorsystem (4) so mit dem Gerät verbunden ist,
2. dass physikalische Größen, die die Heizfläche (3) beeinflussen, erfasst werden.

Das Sensorsystem (4) kann im einfachsten Falle, aus einem elektronischen Temperatursensor bestehen. Denkbar sind auch optische Systeme, die elektromagnetische Strahlung erfassen und für Temperaturauswertung geeignet sind. Dieses Sensorsystem (4) muss in einer solchen Position angebracht werden, dass die patentgemäßen physikalischen Größen erfasst werden. Es kann so ausgestaltet sein, dass die zu messenden Größen auch über Entfernung zu erfassen sind. So wäre beispielsweise die Beeinflussung eines Laserstrahls durch Teilchenstaub möglich, wodurch auch gesundheitsschädliche Stoffe zu erfassen wären.

### Zu Anspruch 3

Mit Anspruch 3 wird gemäß Anspruch 2 und 1 beansprucht,
1. dass die regulierbare Energiezufuhr (6) durch Daten aus dem Sensorsystem (4) geregelt wird,
2. so dass eine konstante Energieabgabe in den Heizflächenraum (7) ermöglicht wird.

Die regulierbare Energiezufuhr (6) kann durch ein System, wie z. B. eine Gas- oder Elektrizitätszufuhr ausgeführt sein. Diese Energiezufuhr wird durch das Sensorsytem (4) geregelt, um die Temperatur im Heizflächenraum (7) auf einen Temperaturbereich zu begrenzen.

### Zu Anspruch 4

Anspruch 4 gemäß Anspruch 1 und Anspruch 2 dadurch beansprucht,
1. dass eine Höhenverstellung vorgesehen ist,
3. um den Abstand zwischen regulierbarer Energiezufuhr (6) und Heizfläche (3) zu variieren.

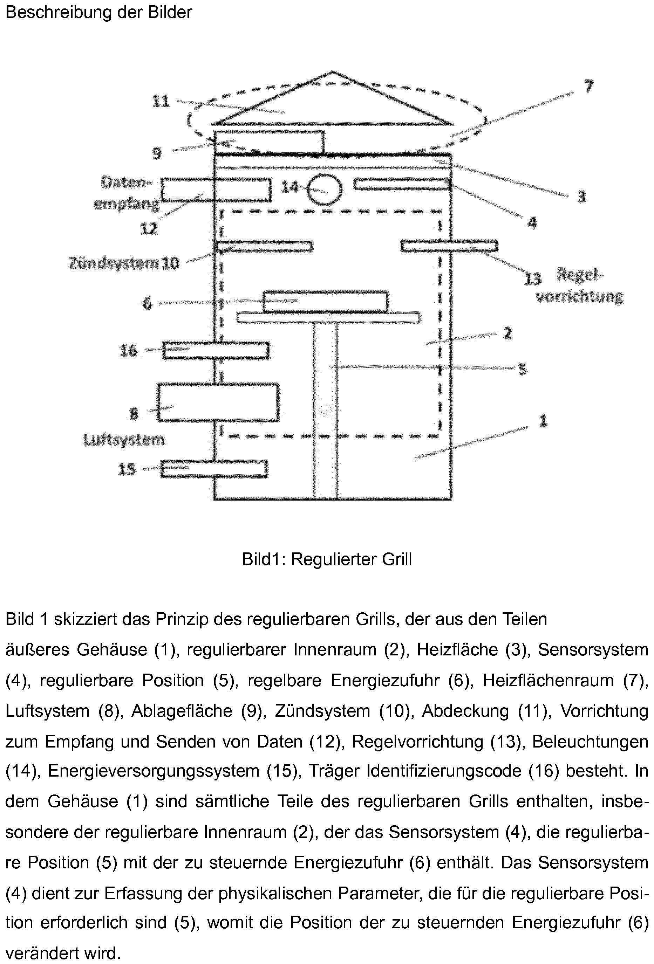

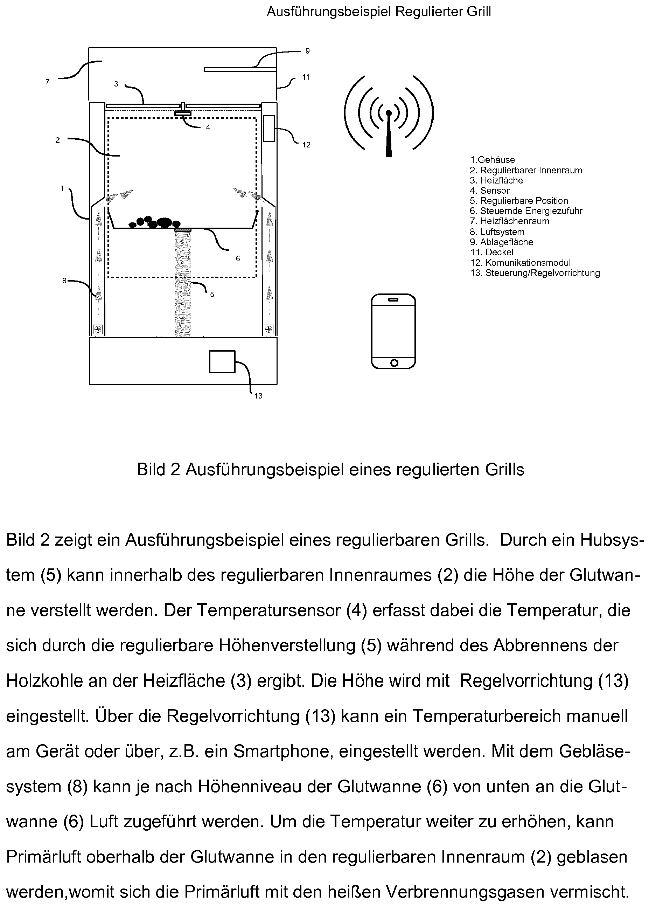

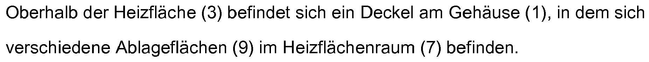

Statt oder zur Ergänzung von Anspruch 3 ist vorgesehen, dass die Höhe der Energiezufuhr (6) variiert werden kann. Das kann z. B. durch eine Ständereinrichtungwie Bild 1 mit (5) bzw. in einer Ausführungsform Bild 2 mit (5) gelöst sein. Es können auch Laufschienen in der Gehäusewand (3) vorhanden sein. Das Variieren der Höhe der Energiezufuhr (6) wird durch das Sensorsystem (4) geregelt, um die Temperatur auf der Heizfläche bzw. den durch die Temperatur verursachten Energiefluss (Wärmefluss) zum Heizflächenraum (7) zu begrenzen. Die Höhenverstellung kann auch außerhalb des Gehäuses montiert werden.

### Zu Anspruch 5

Anspruch 5 gemäß Anspruch 1 dadurch beschrieben,
1. dass ein Luftsystem (8) zur Zufuhr von Frischluft vorgesehen ist,
2. das statt der regulierbaren Energiezufuhr (6) gemäß Anspruch 3 oder zur Unterstützung der Energiezufuhr (6) in den Raum (2) hinein einen konstanten Temperaturbereich im Heizflächenraum (7) ermöglicht.

Das Luftsystem ermöglicht durch Zufuhr unterschiedlicher Luftmengen pro Zeiteinheit eine unterschiedliche Verbrennungsgeschwindigkeit im Raum (2) und in der Folge einen geregelten Temperaturbereich an der Heizfläche (3). In einfacher Weise kann frische Primärluft in den regulierbaren Innenraum befördert werden, um eine vorgesehene Energieumsetzung, z.B. durch verbrennende Holzkohle zu gewährleisten. Möglich ist es derart auch, einen regulierten Kühleffekt durch das vermischen heißer Verbrennungsgase mit frischer Primärluft zu erzeugen. Zwecks Temperaturegelung ist es auch möglich, eine Mischung aus Gas und Luft oder ein kontrolliertes Abführen von Gasen und Luft mit dem Luftsystem (8) zu erzeugen. Das Luftsystem kann auch, wie in Anspruch 4 beschrieben, per Höhenverstellung mitgeführt werden.

### Zu Anspruch 6

Anspruch 6 gemäß Anspruch 1 dadurch beschrieben,
1. dass die Ablagefläche (9) vorhanden ist,
2. die in Teilbereiche aufgeteilt sein kann,
3. wobei einige Teilbereiche nicht oder indirekt erhitzt werden.

Die Ablagefläche (9) ist in verschiedene Teilbereiche aufgeteilt, so dass einzelne Teilbereiche z.B. als Rost, durch eine andere Art von Rost, durch Grillplatten oder Keramikflächen ausgeführt sein können. Diese Teile sind kombinierbar und in den Teilbereichen der Auflagefläche (9) unterschiedlich anzuordnen, so dass sie z. B. in unterschiedlichen Temperaturbereichen liegen. Es kann sich auch um Teile handeln, die ihre eigene Form, Oberfläche oder Struktur oder die von Lebensmitteln oder Materialien verändern können. Wenn sich beispielsweise Umhüllungsmaterialen beim Erwärmen zusammenziehen, können derart Lebensmittel eingeschweißt werden.

### Zu Anspruch 7

Anspruch 7 gemäß Anspruch 1 dadurch beschrieben,
1. dass ein Zündsystem (10) mit dem Gerät so verbunden ist,
2. dass das Starten der Energiezufuhr (6) erfolgt.

Das Zündsystem kann z.B. aus einem oder mehreren elektronischen Bauteilen bestehen, die den Brennstoff z.B. Holzkohle oder den Brennstoff in der Energiezufuhr (6) zünden. Möglich sind auch thermische Methoden der Zündung bzw. Zündungsbeschleunigung wie optische Methoden der Zufuhr von Strahlungsenergie, Einsprühen von Katalysatoren. Die Positionierung des Zündsystems kann sich dabei in Teilen sowohl innerhalb als auch außerhalb des Gerätes befinden.

### Zu Anspruch 8

Anspruch 8 ist dadurch beschrieben,
1. dass eine Abdeckung (11) mit dem Gerät so verbunden ist,
2. dass eine Begrenzung des Heizflächenraumes (7) erfolgt.

Das Gerät kann oberhalb der Heizfläche (3) mit einer Abdeckung (11) so versehen sein, dass eine Begrenzung des Heizflächenraumes (7) erfolgt. Zweck der Abdeckung (Deckel) ist es, durch die Begrenzung, innerhalb des Heizflächenraumes (7) konstante, physikalische Parameter wie z.B. eine konstante Temperatur zu erhalten. Gleichzeitig sollen dort befindliche Lebensmittel oder Gegenstände vor Umwelteinflüssen geschützt werden. Möglich sind auch weitere Möglichkeiten der Nutzung, wie eine weitere Ablage im aufgeklappten Zustand. Auch sicherheitstechnisch ist die Abdeckung z. B. mit einem Verschluss zu versehen.

### Zu Anspruch 9

Zu Anspruch 9 gemäß Anspruch 1 dadurch beschrieben,
1. dass eine Vorrichtung (12) am Gerät zum Empfang und Senden von Daten angebracht ist,
2. wobei die empfangenen Daten für Regelzwecke der Vorrichtung (12) genutzt werden können,
3. wobei die gesendeten Daten zur entfernten Kontrolle des regulierbaren Grills verwendet werden können.

Die Vorrichtung (12) kann zum Empfang von Daten genutzt werden, die z. B. von einer Mobilphone-APP gesendet werden. Es kann sich auch um eine Bluetooth Schnittstelle handeln. Die empfangenen Daten können für Regelzwecke genutzt werden, wie sie durch Anspruch 10 beschrieben werden.

### Zu Anspruch 10

Zu Anspruch 10 gemäß Anspruch 1 dadurch beschrieben,
1. dass eine per Dateneingabe steuerbare Regelvorrichtung (13) am Gerät angebracht ist,
2. welche die physikalischen Größen regelt, die die physikalischen Vorgänge im Heizflächenraum (7) beeinflussen.

Die Regelvorrichtung kann durch Dateneingabe per Hand bedient werden, so dass die eingebebenen Daten für die Regelung bzw. Steuerung der physikalischen Parameter der beanspruchten Geräteteile verwendet werden kann. Die Dateneingabe bzw. der Datenaustausch kann auch über elektronische Schnittstellen stattfinden. So könnte eine Bluetooth-Schnittstelle verwendet werden, die per APP in einem Mobilphone bedient wird.

### Zu Anspruch 11

Anspruch 11 gemäß Anspruch 1, Anspruch 10 dadurch beschrieben,
dass die Temperatur im Heizflächenraum (7) durch die Regelvorrichtung (13) geregelt wird.

Die Temperatur im Heizflächenraum (7) kann durch die Regelvorrichtung (13) z. B. über einen bestimmten Zeitraum auf eine konstante Temperatur eingestellt werden.

### Zu Anspruch 12

Anspruch 12 gemäß Anspruch 1 dadurch beschrieben,
1. dass ein System zur Reinigung vorgesehen ist,
2. welches eine verschmutzungsfreie Energieabgabe der Energiezufuhr (6) ermöglicht.

Das Reinigungssystem kann im einfachsten Fall ein mechanisches Bauteil z.B. ein Motor sein, der durch Vibration die Energiezufuhr (6) bei einem Betrieb mit Holzkohle von Verbrennungsrückständen (Asche) befreit. Dieses Reinigungssystem ist dabei in solch einer Position zur Energiezufuhr (6) angebracht, dass eine physikalische Beeinflussung stattfindet.

### Anspruch 13

Anspruch 13 gemäß Anspruch 1, 2 und Anspruch 4 dadurch beschrieben,
1. dass die Energiezufuhr (6) in verschiedene Teilvolumen unterteilt ist,
2. wodurch der Abstand zwischen regulierbarer Energiezufuhr (6) und Heizflächenraum (7) zu variieren ist.

Die Energiezufuhr kann in verschiedene Teilbereiche unterteilt werden, die auch nach Anspruch 4 separat höhenverstellt werden können. Somit ist es möglich, dass
erhitzbare Lebensmittel auf der Heizfläche (3) verschiedenen Temperaturbereichen ausgesetzt sind. Möglich ist auch eine Variationen der Energiezufuhr (6) gemäß Anspruch 3 in den verschiedenen Teilbereichen, sowie eine Kombination von verschiedenen Brennstoffen. Ein besonderes Anwendungsgebiet ist z.B Holzkohlenfeuerung, da diese sich nicht in der Energiezufuhr wie eine Gas- oder Elektrozufuhr regulieren lässt.

### Zu Anspruch 14

Anspruch 14 gemäß Anspruch 1 ist dadurch beschrieben,
1. dass ein Energieversorgungsystem (15) im Gehäuse (1) vorhanden ist,
2. welches sämtliche Energie verbrauchenden Komponenten mit Energie versorgt.

Mit dem Energieversorgungssystem ist es möglich, die elektrische Energie verbrauchenden Geräteteile für die angedachte Verwendung zu versorgen. Die Versorgung kann im einfachsten Fall durch eine Batterie oder eine Netzversorgung erfolgen.

### Zu Anspruch 15

Anspruch 15 gemäß Anspruch 1 ist dadurch beschrieben,
1. dass das Gerät 1 beweglich ist,
2. womit eine Positionsveränderung oder Bewegung des Gerätes ermöglicht wird

Die beanspruchte Beweglichkeit kann z.B durch Rollen an der Unterseite des Gerätes ausgeführt werden. Derart ist das Gerät manuell zu bewegen. Möglich sind auch Antriebe z.B. durch einen Elektromotor, durch Ketten, auf Schienen etc.

### Zu Anspruch 16

Anspruch 16 gemäß Anspruch 1 und Anspruch 10 ist dadurch beschrieben,
1. dass ein Wendesystem vorgesehen ist,
2. welches im Heizflächenraum (7) verwendet werden kann.

Es ist ein Wendesystem vorgesehen, das grillbare Lebensmittel aufnehmen kann, das im Heizflächenraum (7) angeordnet ist. Allgemein bekannt ist die Verwendung von Drehspießen. Eine weitere Möglichkeit ist die Verwendung eines mechanisch beweglichen Rostes, das z.B. durch Rotation der Stäbe Würstchen auf einer Ablagefläche dreht. Aber auch andere Variationen durch kippen oder wenden sind möglich.

### Zu Anspruch 17

Anspruch 17 gemäß Anspruch 1 und Anspruch 8 ist dadurch beschrieben,
1. dass eine oder mehrere Beleuchtungen (14) vorgesehen sind,
2. die das Gehäuse (1) von innen oder wahlweise von außen ausleuchtet.

Im bzw. am Gerät ist eine Beleuchtung (14) vorgesehen, die für das Ausleuchten der Heizfläche (3), des regulierbaren Innenraumes (2), der regulierbaren Position (5) und der zu steuernden Energiezufuhr (6) genutzt werden kann. Möglich ist auch eine Beleuchtung von Designelementen oder Logos.

### Zu Anspruch 18

### Anspruch 18 gemäß Anspruch 1 und Anspruch 2 dadurch beschrieben

1. dass ein Löschsystem mit dem Gerät so verbunden ist,
2. dass bei Gefahr ein Löschmittel direkt an den Brandherd einbringbar ist.

Im bzw. am Gerät ist ein Löschsystem angebracht, das durch das Sensorsystem (2) eine zulässige Temperaturüberschreitung (Brand) dedektieren kann und mit einem Löschmittel z.B. Wasser oder Löschschaum den Brand löscht.

### Zu Anspruch 19

Zu Anspruch Anspruch 19 gemäß Anspruch 1 dadurch beschrieben
1. dass ein System für die Energieversorgungsystem (15) vorgesehen ist,
2. so dass verschiedene Energieträger genutzt werden können.

Das Energieversorgungsystem (15) wird genutzt, um die Energiezufuhr (6) mit Energie zu versorgen. Die Energiezufuhr (6) kann z.B. aus einen elektrischen Heizsystem, das über ein Kabelsystem angeschlossen ist, erfolgen.

### Zu Anspruch 20

Anspruch 20 gemäß Anspruch 1 dadurch beschrieben,
dass ein elektronisch lesbarer Identifizierungscode auf einem Träger (16) am Gerät angebracht ist.

Es ist ein elektronisch lesbarer Identifizierungscode auf einem Träger vorhanden, der am Gerät angebracht ist. Damit ist das Gerät zu Identifizieren.

## Patentansprüche

1. Anspruch 1: Es wird ein Gerät zur Regulierung von physikalischen Größen durch folgende Merkmale beansprucht,
1. wobei das Gerät aus einem äußeren Gehäuse (1) besteht,
2. wobei das äußere Gehäuse (1) von einem Heizflächenraum (7) begrenzt wird,
3. wobei der Heizflächenraum (7) zur Aufnahme von erhitzbaren Lebensmitteln dient,
4. das äußere Gehäuse (1) einen regulierbaren Innenraum (2) enthält,
5. in dem regulierbaren Innenraum (2) eine regulierbare Energiezufuhr (6) enthalten ist,
6. wobei die regulierende Energiezufuhr (6) zur Erzeugung von Wärme dient,
7. wozu die physikalischen Größen im Sensorsystem (4) genutzt werden,
8. so dass die erzeugte Wärme den Heizflächenraum (7) in einem begrenzten Temperaturbereich hält,
9. womit die erhitzbaren Lebensmittel im Heizflächenraum (7) in dem begrenzten Temperaturbereich enthalten sind.

2. Anspruch 2 gemäß Anspruch 1 **dadurch gekennzeichnet,**
1. **dass** das Sensorsystem (4) so mit dem Gerät verbunden ist,
2. **dass** physikalische Größen, die den Heizflächenraum (7) beeinflussen, erfasst werden.

3. Anspruch 3 gemäß Anspruch 1 und Anspruch 2 **dadurch gekennzeichnet,**
1. **dass** die regulierbare Energiezufuhr (6) durch Daten aus dem Sensorsystem (4) so geregelt wird,
2. **dass** eine konstante Energieabgabe ermöglicht wird.

4. Anspruch 4 gemäß Anspruch 1 und Anspruch 2 **dadurch gekennzeichnet**,
1. das eine Höhenverstellung vorgesehen ist,
2. um den Abstand zwischen regulierbarer Energiezufuhr (6) und Heizfläche (3) zu variieren.

5. Anspruch 5 gemäß Anspruch 1 **dadurch gekennzeichnet,**
1. **dass** ein Luftsystem (8) zur Zufuhr von Frischluft vorgesehen ist,
2. das statt der regulierbaren Energiezufuhr (6) oder zur Unterstützung der Energiezufuhr (6) in den Raum (2) hinein einen konstanten Temperaturbereich im Heizflächenraum (7) ermöglicht.

6. Anspruch 6 gemäß Anspruch 1 **dadurch gekennzeichnet,**
1. **dass** die Ablagefläche (9) vorhanden ist,
2. die in Teilbereiche aufgeteilt sein kann,
3. wobei einige Teilbereiche nicht oder indirekt erhitzt werden.

7. Anspruch 7 gemäß Anspruch 1 **dadurch gekennzeichnet,**
1. **dass** ein Zündsystem mit dem Gerät verbunden ist,
2. so dass das automatische Starten der Energiezufuhr (6)
3. und die Zündung der Energiezufuhr (6) erfolgt.

8. Anspruch 8 **dadurch gekennzeichnet,**
1. **dass** eine Abdeckung (11) mit dem Gerät so verbunden ist,
2. **dass** eine Begrenzung des Heizflächenraums (7) erfolgt.

9. Anspruch 9 gemäß Anspruch 1 **dadurch gekennzeichnet,**
1. **dass** eine Vorrichtung (12) am Gerät zum Empfang und Senden von Daten angebracht ist,
2. wobei die empfangenen Daten für Regelzwecke der Vorrichtung (12) genutzt werden können,
3. wobei die gesendeten Daten zur entfernten Kontrolle des regulierbaren Grills verwendet werden können.

10. Anspruch 10 gemäß Anspruch 1 und Anspruch 2 **dadurch gekennzeichnet,**
1. **dass** eine per Dateneingang steuerbare Regelvorrichtung (13) am Gerät angebracht ist,
2. welche die physikalischen Größen regelt, die die physikalischen Vorgänge im Heizflächenraum (7) beeinflussen.

11. Anspruch 11 gemäß Anspruch 1, Anspruch 10 **dadurch gekennzeichnet dass** die Temperatur im Heizflächenraum (7) durch die Regelvorrichtung (13) geregelt wird.

12. Anspruch 12 gemäß Anspruch 1 **dadurch gekennzeichnet,**
1. **dass** ein System zur Reinigung vorgesehen ist,
2. welches eine verschmutzungsfreie Energieabgabe der Energiezufuhr (6) ermöglicht.

13. Anspruch 13 gemäß Anspruch 1, 2 und Anspruch 4 **dadurch gekennzeichnet, ,**
1. **dass** die Energiezufuhr (6) in verschiedene Teilvolumen unterteilt ist,
2. wodurch der Abstand zwischen regulierbarer Energiezufuhr (6) und Heizflächenraum (7) zu variieren ist.

14. Anspruch 14 gemäß Anspruch 1 **dadurch gekennzeichnet,**
1. **dass** ein Energieversorgungsystem (15) im Gehäuse (1) vorhanden ist,
2. welches sämtliche Energie verbrauchenden Komponenten mit Energie versorgt.

15. Anspruch 15 gemäß Anspruch 1 **dadurch gekennzeichnet,**
1. **dass** das Gerät 1 beweglich ist,
2. womit eine Positionsveränderung oder Bewegung des Gerätes ermöglicht wird

16. Anspruch 16 gemäß Anspruch 1 und Anspruch 10 **dadurch gekennzeichnet,**
1. **dass** ein Wendesystem vorgesehen ist,
2. welches im Heizflächenraum (7) verwendet werden kann

17. Anspruch 17 gemäß Anspruch 1 und Anspruch 8 **dadurch gekennzeichnet**,
1. das eine oder mehrere Beleuchtungen (14) vorgesehen sind,
2. die sowohl das Gehäuse (1) von innen wie auch wahlweise von außen ausleuchten.

18. Anspruch 18 gemäß Anspruch 1 und Anspruch 2 **dadurch gekennzeichnet**
1. **dass** ein Löschsystem mit dem Gerät so verbunden ist,
2. **dass** bei Gefahr ein Löschmittel direkt an den Brandherd einbringbar ist.

19. Anspruch 19 gemäß Anspruch 1 **dadurch gekennzeichnet**
1. **dass** ein System für die Energieversorgung vorgesehen ist,
2. so das verschiedene Energieträger genutzt werden könne.

20. Anspruch 20 gemäß Anspruch 1 **dadurch gekennzeichnet,**
**dass** ein elektronisch lesbarer Identifizierungscode auf einem Träger (16) am Gerät angebracht ist.
